**Europäisches Patentamt**

**European Patent Office**

**Office européen des brevets**

(19)

(11) Veröffentlichungsnummer: **0 017 837**
**B1**

(12)

# EUROPÄISCHE PATENTSCHRIFT

(45) Veröffentlichungstag der Patentschrift: **18.01.84**

(51) Int. Cl.³: **F 16 G 11/00, A 63 B 61/00**

(21) Anmeldenummer: **80101717.9**

(22) Anmeldetag: **01.04.80**

(54) **Verbindungsmittel für Seilstränge von Netzen.**

(30) Priorität: **12.04.79 DE 2914885**

(43) Veröffentlichungstag der Anmeldung:
**29.10.80 Patentblatt 80/22**

(45) Bekanntmachung des Hinweises auf die Patenterteilung:
**18.01.84 Patentblatt 84/3**

(84) Benannte Vertragsstaaten:
**AT BE CH FR GB IT LI LU NL SE**

(56) Entgegenhaltungen:
**GB - A - 618 940**

(73) Patentinhaber: **Pfeifer Seil- und Hebetechnik,
GmbH & Co.
Maximilianstrasse 4
D-8940 Memmingen (DE)**

(72) Erfinder: **Stauske, Dieter, Ing. grad.
Dörfler Strasse 12
D-8940 Memmingen (DE)**

(74) Vertreter: **Pfister, Helmut, Dipl.-Ing.
Buxacher Strasse 9
D-8940 Memmingen/Bayern (DE)**

Courier Press, Leamington Spa, England.

## Verbindungsmittel für Seilstränge von Netzen

Die Erfindung betrifft ein ringförmiges Verbindungsmittel für sich kreuzende Seilstränge von Netzen, insbesondere für Kinderspielplätze, wobei das Verbindungsmittel an den Ecken der sich kreuzenden Seilstränge nach innen eingebogen ist, zur Bildung einer kreuzartigen Innenkontur mit abgerundeten äußeren Enden und Rundungen an den Einbiegungen.

Ein derartiges Verbindungsmittel ist beschrieben in der GB—A—618 940. Gegenüber einem einfachen kreisförmigen Ring zur Bildung von Kreuzungspunkten an Netzen, hat ein solches Verbindungsmittel den Vorteil, daß das Gleiten der Seilstränge im Ring verhindert wird. Werden solche Verbindungsmittel bei Netzen für Kinderspielplätze angewandt, so stellen die Öffnungen im Bereich der Einbiegungen und zwar zwischen den Rundungen an den Einbiegungen und den sich kreuzenden Seilsträngen eine erhebliche Unfallgefahr dar. Wird beachtet, daß die Netze für Kinderspielplätze aus ausreichend dicken Seilsträngen gefertigt sein müssen, um den spielenden Kindern daran Halt zu geben, bilden sich Öffnungen, die ausreichend groß sind, um die Finger der spielenden Kinder aufzunehmen. Werden demgegenüber einfache kreisförmige Ringe benützt, ergeben sich viel größere Öffnungen und die Ringe mit den Einbiegungen erweisen sich insofern als nachteilig.

Der Erfindung liegt die Aufgabe zugrunde, ein Verbindungsmittel der eingangs beschriebenen Art dahingehend weiterzuentwickeln, daß dieses keine Unfallgefahr mehr verursacht und dennoch die Funktion als Verbindungsmittel der sich kreuzenden Seilstränge voll erfüllt.

Zur Lösung dieser Aufgabe geht die Erfindung aus von dem Verbindungsmittel der eingangs beschriebenen Art und schlägt vor, daß jede der Rundungen der äußeren Enden Halbkreisform aufweist, an die sich zwei parallel zueinander verlaufende Begrenzungen anschließen und daß die Übergänge zweier benachbarter, rechtwinklig zueinander stehender Begrenzungen einen im Vergleich zum Radius der Halbkreisform der äußeren Enden kleinen Radius aufweisen.

Die Erfindung gibt eine überraschend einfache Lösung der Aufgabe. Die Restöffnungen, die in der Kreuzungsecke der sich kreuzenden Seilstränge verbleiben, können so gering gehalten werden, daß beispielsweise kein Finger eines Kindes eindringen kann.

Dennoch werden keine scharfen Kanten erzeugt, da die Abrundungen beibehalten bleiben. Überraschenderweise gelingt bei dem erfindungsgemäßen Verbindungsmittel das Einfädeln der Seilstränge verhältnismäßig leicht. Dies rührt offenbar daher, daß beim Einfädelungsvorgang jedes Seil eine Führung am Verbindungsmittel erhält, so daß Klemmerscheinungen beim Einfädeln ausgeschlossen sind. Trotzdem wird im montierten Zustand den sich kreuzenden Seilsträngen ein guter Halt gegeben, so daß ein Gleiten in der Regel ausgeschlossen ist.

In der Zeichnung ist ein Ausführungsbeispiel der Erfindung schematisch dargestellt. Es zeigen:

Fig. 1 eine Draufsicht auf ein erfindungsgemäßes Verbindungsmittel und

Fig. 2 einen Schnitt durch die Darstellung der Fig. 1 entsprechend der Schnittlinie II—II und zwar in montiertem Zustand.

Das erfindungsgemäße Verbindungsmittel ist vorzugsweise für Raumnetze gedacht, bei denen die sich kreuzenden Seilstränge nicht in einer Ebene liegen, sondern die Seilstränge jeweils für sich verschiedene Ebenen definierer, die beispielsweise aufeinander senkrecht stehen können.

Die Erfindung kann aber auch bei Flächennetzen Anwendung finden.

Das ringförmige Verbindungsmittel gemäß der Erfindung ist in der Regel ein ebenes Gebilde, es ist jedoch auch möglich, das Verbindungsmittel etwas räumlich zu verformen und zwar in dem Sinne, daß es auf die Ausrichtung der durchgezogenen Seilstränge Rücksicht nimmt. Auf diese Weise paßt sich das Verbindungsmittel den Bedingungen besser an, die bei einem Flächennetz gegeben sind.

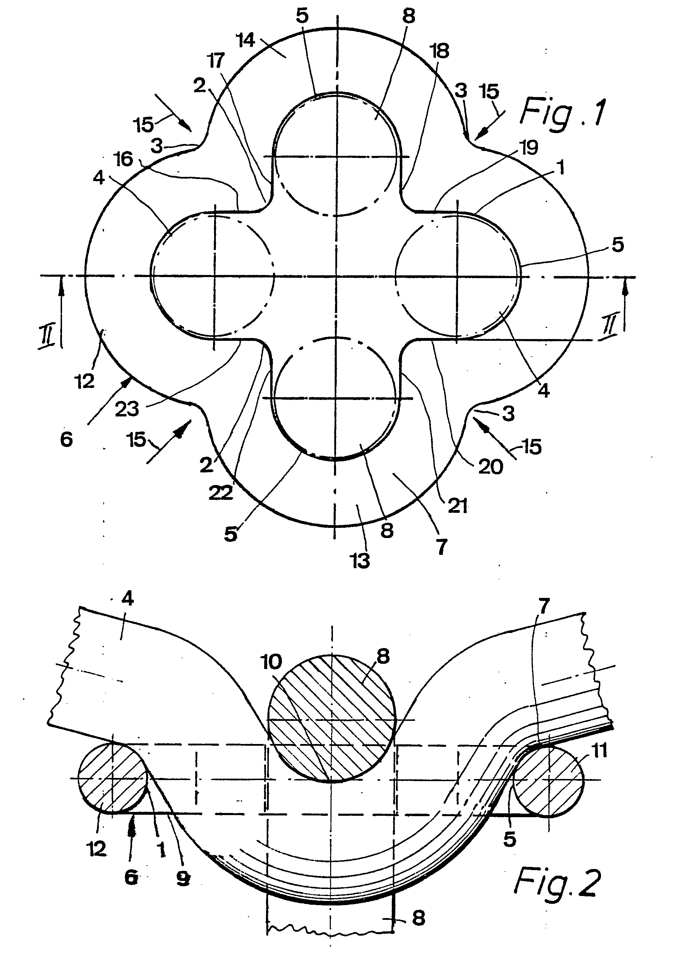

Bei dem in der Zeichnung gezeigten Verbindungsmittel 6 ist in der Fig. 1 eine Innenkontur erkennbar, die eine Kreuzform besitzt und zwar aus zwei sich rechtwinklig kreuzenden Balken. Die Balkenenden 5 der Innenkontur sind entsprechend der Balkendicke kreisbogenförmig gerundet. An die Balkenenden 5 schließen sich jeweils zwei parallel zueinander verlaufende Begrenzungen 17 und 18 bzw. 19 und 20, bzw. 21 und 22, bzw. 23 und 16 an. Die äußeren Abrundungen an den Einbiegungen 15 sind mit 3 bezeichnet. Die Rundungen 2 zwischen zwei benachbarten, rechtwinklig zueinander stehenden Begrenzungen besitzen einen im Vergleich zum Radius der Halbkreisform der äußeren Enden 5 kleinen Radius, so daß scharfe Ecken oder Einschnitte vermieden sind.

Aus der Darstellung der Fig. 2 geht hervor, daß der Querschnitt des Verbindungsmittels 6 kreisförmig gehalten ist. Es kann aber auch in besonderen Fällen von dieser Kreisform abgewichen werden.

Der eine Seilstrang 4 liegt an der einen Seite 7 des Verbindungsmittels 6 an, während der andere Seilstrang 8 an der gegenüberliegenden Seite 9 des Verbindungsmittels 6 zur Anlage kommt. Bei 10 liegen beide Seilstränge aufeinander auf.

Die Ausbildung des Seiles, das beispielsweise ein ummanteltes Drahtseil sein kann, ist in der Zeichnung nicht näher dargestellt.

**0 017 837**

Wenn das Verbindungsmittel, wie vorstehend erwähnt, räumlich geformt sein soll, dann werden die Teile 11 und 12, die dem Seiltrang 4 zugeordnet sind, bei der Anordnung und Verwendung im Sinne der zeichnerischen Darstellung der Fig. 2 etwas nach unten gekrümmt sein, während die Teile 13 und 14 sinngemäß etwas nach oben gebogen sein werden.

Das erfindungsgemäße Verbindungsmittel kann in verschiedener Weise hergestellt werden. Beispielsweise kann das Verbindungsmittel als Aluminium-Schmiedestück ausgebildet sein. Auch die Ausbildung als Aluminium-Gußstück ist möglich.

Für hohe Belastungen kann auch eine Stahlausbildung erfolgen, beispielsweise in Form eines Biegeteils.

In der Regel wird das Verbindungsmittel ein fertiggeformtes Bauteil sein, in das die Seilstränge bei der Montage eingefädelt werden.

## Patentanspruch

Ringförmiges Verbindungsmittel (6) für sich kreuzende Seilstränge (4, 8) von Netzen, insbesondere für Kinderspielplätze, wobei das Verbindungsmittel (6) in den Ecken der sich kreuzenden Seilstränge nach einnen eingebogen ist, zur Bildung einer kreuzartigen Innenkontur (1) mit abgerundeten äußeren Enden (5) und Rundungen (2) an den Einbiegungen (15), dadurch gekennzeichnet, daß jede der Rundungen der äußeren Enden (5) Halbkreisform aufweist, an die sich zwei parallel zueinander verlaufende Begrenzungen (23, 16; 17, 18; 19, 20; 21, 22) anschließen, und daß die Übergänge zweier benachbarter, rechtwinkelig zueinander stehender Begrenzungen (16, 17; 18, 19; 20, 21; 22, 23) einen im Vergleich zum Radius der Halbkreisform der äußeren Enden (5) kleinen Radius aufweisen.

## Revendication

Moyen de liaison annulaire (6) pour des brins de câbles entrecroisés (4, 8) de filets notamment pour des aires de jeux pour enfants, le moyen de liaison (6) étant incurvé vers l'intérieur dans les angles des brins des câbles entrecroisés pour former un contour intérieur (1) cruciforme comportant des extrêmités extérieures arrondies (5) et des arrondis (2) dans les régions incurvées (15), caractérisé en ce que chacun des arrondis des extrêmités extérieures (5) présente une forme semi-circulaire à làquelle se raccordent deux deux délimitations s'étendant parallèlement l'une à l'autre (23, 16; 17, 18; 19, 20; 21, 22), et que les raccords de deux délimitations voisines situées à angle droit l'une de l'autre (16, 17; 18, 19; 20, 21; 22, 23) présentent und rayon petit comparé au rayon de la forme semi-circulaire de l'extrêmité extérieure (5).

## Claim

A ring-shaped fastening means (6) for crossing strands (4, 8) of nets, particularly for playground equipment, where the fastening means (6) is being curved inwardly at the corners of the crossing strands to form a cross-like interior configuration (1) with rounded outer ends (5) and roundings (2) at the curved ends (15) wherein each of the roundings of the outer ends (5) have a semi-circular configuration being confined by two parallel members (23, 16; 17, 18; 19, 20; 21, 22) and where the transitional sections of the two adjacent confining members (16, 17; 18, 19; 20, 21; 22, 23) being arranged rectangularly to each other form, compared to the radius of semi-circular configuration of the outer ends (5), a small radius.

Fig .1

Fig.2